# EUROPEAN PATENT APPLICATION

(11) **EP 4 483 713 A1**
(43) Date of publication of application: **01.01.2025**
(21) Application number: 23780106.3
(22) Date of filing: 24.03.2023
(51) Int. Cl.: A01M 1/14, G06T 7/00, G06V 10/74

(54) **INSECT IDENTIFICATION IMAGE DATA GENERATION METHOD AND INSECT IDENTIFICATION SYSTEM**

(30) Priority: 31.03.2022 JP 2022058795
(71) Applicant: Pest Vision Solutions Co., Ltd., Takatsuki-shi, Osaka 569-1133 (JP)
(72) Inventor: KATAYAMA, Junichiro, Takatsuki-shi, Osaka 569-1133 (JP); KAWATAKE, Yuji, Takatsuki-shi, Osaka 569-1133 (JP); TANOE, Takafumi, Takatsuki-shi, Osaka 569-1133 (JP); KAMEMOTO, Tatsuya, Takatsuki-shi, Osaka 569-1133 (JP); TAKETSU, Kazusuke, Takatsuki-shi, Osaka 569-1133 (JP); BABA, Yosuke, Takarazuka-shi, Hyogo 665-0051 (JP)
(74) Representative: Grosse, Felix Christopher
(86) International application number: PCT/JP2023/011675
(87) International publication number: WO 2023/190096

(57) **Abstract**

A method for generating bug identification image data according to the present invention is a method for generating bug identification image data in which pre-processing image data with an image of a bug is processed to generate the bug identification image data, and the method includes: a bug extracting step of extracting bug data on the bug from pre-processing image data; a point information imparting step of imparting point information data to at least three points designated from among the extracted bug data; and a sequence information imparting step of imparting sequence information on an order to the point information data at the at least three points designated in the point information imparting step.

## Description

### CROSS-REFERENCE TO RELATED APPLICATION

This application claims priority to Japanese Patent Application No. 2022-058795, the disclosure of which is incorporated herein by reference in its entirety.

### FIELD

The present invention relates to a method for generating bug identification image data, and a bug identification system.

### BACKGROUND

A system described in Patent Literature 1 is conventionally known as a trapped bug identification system for identifying trapped bugs. The trapped bug identification system includes an image reading device configured to read an image of an adhesive sheet with a bug adhering thereto, and an analysis apparatus for analyzing the read image to identify the trapped bug. The analysis apparatus includes: a pre-processing device configured to process the read image to distinguish a bug area of the image in which the bug is present from a background area; a characteristic extracting device configured to acquire merkmal data of the bug from the pre-processed image; a data storage device configured to store standard merkmal data obtained by standardizing merkmals of morphological characteristics of the bug; an identifying device configured to identify the bug through comparison between the merkmal data extracted by the characteristic extracting device and the standard merkmal data stored in the data storage device.

The trapped bug identification system as described above is deemed to be capable of obtaining more objective and more consistent identification results than in the case where bugs are manually identified.

### CITATION LIST

### Patent Literature

Patent Literature 1: JP 2014-142833 A

### SUMMARY

### Technical Problem

When the trapped bug, which takes various different postures, adheres to the adhesive sheet while being in, for example, a bent state, there are some cases where the trapped bug identification system as described in Patent Literature 1 falsely recognizes the morphological characteristics of the bug without being capable of properly extracting the characteristics, resulting in a poor identification accuracy.

It is therefore an object of the present invention to provide a method for generating bug identification image data and a bug identification system, which are capable of increasing an identification accuracy of bugs in an image data.

### Solution to Problem

A method for generating bug identification image data of the present invention includes: a bug extracting step of extracting bug data on a bug from pre-processing image data with an image of the bug; a point information imparting step of imparting point information data to at least three points designated from among the extracted bug data; and a sequence information imparting step of imparting sequence information on an order to the point information data at the at least three points designated in the point information imparting step.

A bug identification system of the present invention includes: an image data acquiring part configured to acquire an object image data with an image of a bug to be identified; and a bug identifying part configured to identify a type of the bug in the object image data, in which the bug identifying part is configured to identify the type of the bug in the object image data acquired by the image data acquiring part through a learned model constructed by machine learning using training data, and the learned model is constructed through the machine learning using the training data including: training image data with an image of a bug; posture information including point information data imparted to at least three points designated from among the bug data on the bug in the training image data, and sequence information on an order imparted to the point information data; and type information on the type of the bug in the training image data.

### Effect of the Invention

According to the present invention, provided can be a method for generating bug identification image data and a bug identification system, which are capable of increasing an identification accuracy of bugs in an image data.

### BRIEF DESCRIPTION OF DRAWINGS

Fig. 1 is a schematic view of an image capturing apparatus configured to generate pre-processing image data in a method for generating bug identification image data according to one embodiment of the present invention.
Fig. 2 is a flowchart showing a processing in the method for generating the bug identification image data.
Fig. 3 is a flowchart showing a processing in a part extracting step in the method for generating the bug identification image data.
Fig. 4 is a view showing an image corresponding to the pre-processing image data with frame information imparted thereto in the method for generating the bug identification image data.
Fig. 5A is a view showing a bug of bug data for which the part extracting step is completed in the method for generating the bug identification image data, the view showing the bug of the bug data for which parts are identifiable.
Fig. 5B is a view showing a bug of bug data for which the part extracting step is completed in the method for generating the bug identification image data, the view showing the bug of the bug data for which parts are unidentifiable.
Fig. 6A is a view showing a bug of bug data with point information data and sequence information imparted thereto in the method for generating the bug identification image data, the view showing the bug of the bug data for which boundaries of parts are identifiable.
Fig. 6B is a view showing a bug corresponding to bug data with point information data and sequence information imparted thereto in the method for generating the bug identification image, the view showing the bug of the bug data for which boundaries of parts are unidentifiable.
Fig. 7 is a schematic diagram of a bug identification system according to one embodiment of the present invention.
Fig. 8 is a block diagram of the bug identification system.
Fig. 9 is a block diagram of a pest control system for detective control.
Fig. 10 is a flowchart showing processing in an increase determining step, a source determining step, and a treatment method determining step in the pest control system for detective control.
Fig. 11 is a flowchart showing processing in a step of determining a chemical treatment method in the pest control system for detective control.
Fig. 12 is a flowchart showing processing in an applicability judging step in the pest control system for detective control.
Fig. 13 is a data table used for judgment in determining various treatments in the pest control system for detective control.
Fig. 14 is a block diagram of a pest control system for preventive control.
Fig. 15 is a flowchart showing a flow of processing in the pest control system for the preventive control.
Fig. 16 is a data table used for judgment in determining information on an environment in which bugs propagate in the pest control system for preventive control.

### DESCRIPTION OF EMBODIMENTS

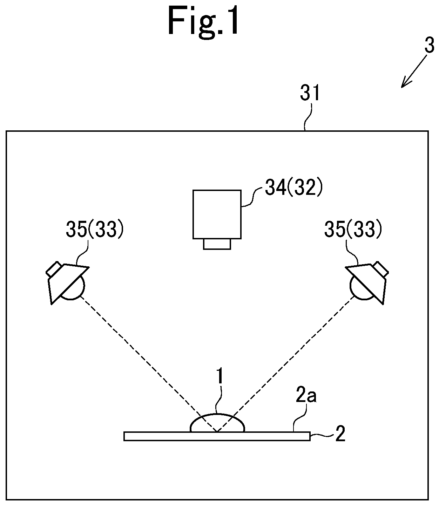

A description will be hereinafter given on a method for generating bug identification image data and a bug identification system 6 according to one embodiment of the present invention, with reference to Fig. 1 to Fig. 8.

First, with reference to Fig. 1, a description will be given on pre-processing image data, which is to be processed in the method for generating the bug identification image data of this embodiment. The pre-processing image data is generated by an image capturing apparatus 3 configured to be capable of capturing an image of a trapping surface 2a of a trapped specimen 2, the trapping surface 2a configured to be capable of trapping a bug 1 and having the bug 1 trapped thereon. The trapped specimen 2 of this embodiment is a specimen having the trapping surface 2a configured to allow the bug 1 to adhere thereto, the specimen having a plurality of the bugs 1 trapped by adhering to the trapping surface 2a; specifically, a bug-trapping paper on which the bugs 1 are trapped. The term "bug" herein embraces all small animals except mammals, birds, and fish and shellfish, and in this embodiment refers to arthropods (in particular insects and spiders). The trapping surface 2a is a flat surface elongated in one direction (i.e., a direction passing through the sheet of Fig. 1 in this embodiment). Further, the trapping surface 2a is a plain surface, and in this embodiment an entirely yellow surface with no lines or the like thereon.

The plurality of bugs 1 adhere to the trapping surface 2a of the trapped specimen 2. Employed as the trapped specimen 2 of this embodiment can be a specimen prepared by sprinkling dead bugs 1 on the trapping surface 2a to allow the dead bugs 1 to adhere thereto, or a specimen prepared by inducing bugs 1 with light or odor to allow the bugs 1 to adhere to the trapping surface 2a, without limitation thereto.

The image capturing apparatus 3 is an apparatus configured to generate the pre-processing image data by capturing an image of the trapped specimen 2. Specifically, the image capturing apparatus 3 includes: a housing 31 having a box shape and capable of blocking outside light; a holding device (not shown) disposed inside the housing 31 and capable of holding the trapped specimen 2 with the trapping surface 2a elongated in the one direction (i.e., the direction passing through the sheet of Fig. 1 in this embodiment); an image capturing device 32 disposed inside the housing 31 and capable of capturing an image of the trapping surface 2a of the trapped specimen 2; an illumination apparatus 33 disposed inside the housing 31 and capable of illuminating the trapping surface 2a of the trapped specimen 2 with light; and an image processor (not shown) configured to process the image captured by the image capturing device 32 to generate the pre-processing image data.

The image capturing device 32 includes a camera 34 disposed away from the trapping surface 2a to capture an image of the trapping surface 2a of the trapped specimen 2 held by the holding device, and a travelling device (not shown) configured to allow the camera 34 to travel along a plane direction of the trapping surface 2a of the trapped specimen 2 held by the holding device. The camera 34 can be moved (travelled) by the traveling device along the plane direction of the trapping surface 2a, and can capture images of the trapping surface 2a at a plurality of positions in the plane direction of the trapping surface 2a while moving along the plane direction of the trapping surface 2a. The camera 34 of this embodiment is disposed at a position opposed to the trapping surface 2a. Further, the camera 34 has such a focal length as to focus only on a portion of the trapping surface 2a opposed to the camera 34.

The illumination apparatus 33 is configured to illuminate the trapping surface 2a with light from both sides of a travelling area in which the camera 34 travels. Specifically, the illumination apparatus 33 includes illumination parts 35 on one side and the other side of the travelling area, and each of the illumination parts 35 illuminates the trapping surface 2a with light. Further, each of the illumination parts 35 is disposed for illumination from a position at substantially 45 degrees away from above a center in a width direction (i.e., a direction orthogonal to the plane direction) of the trapping surface 2a. The illumination apparatus 33 of this embodiment is configured to have a plurality of the illumination parts 35 arranged along the travelling area, and is capable of illuminating an entire area in one direction of the travelling area. The illumination apparatus 33 of this embodiment illuminates the trapping surface 2a with white light.

The image processor generates the pre-processing image data by connecting a plurality of images captured by the image capturing device 32. Specifically, the image processor generates the pre-processing image data through processing in which portions in focus of the plurality of images captured by the camera 34 are connected to each other. In this embodiment, the image processor generates the pre-processing image data by connecting portions of the plurality of images of the trapping surface 2a captured by the camera 34 that are opposed to the camera 34.

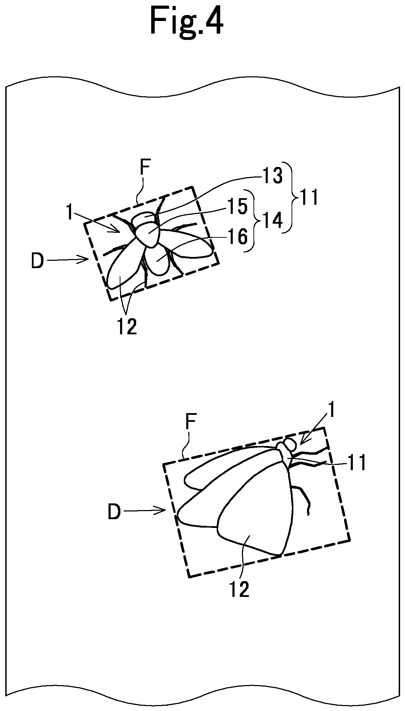

The pre-processing image data thus generated is, for example, data showing an image in which the bug 1 is placed on the trapping surface 2a as shown in Fig. 4. The pre-processing image data of this embodiment is image data of an image in which the trapping surface 2a serves as a background and a plurality of the bugs 1 are present on the background, and the pre-processing image data includes a plurality of bug data D regarding the bugs 1. The bug data D are image data of portions of the pre-processing image data showing the bugs 1.

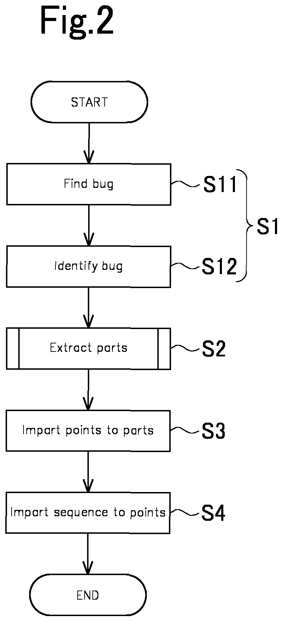

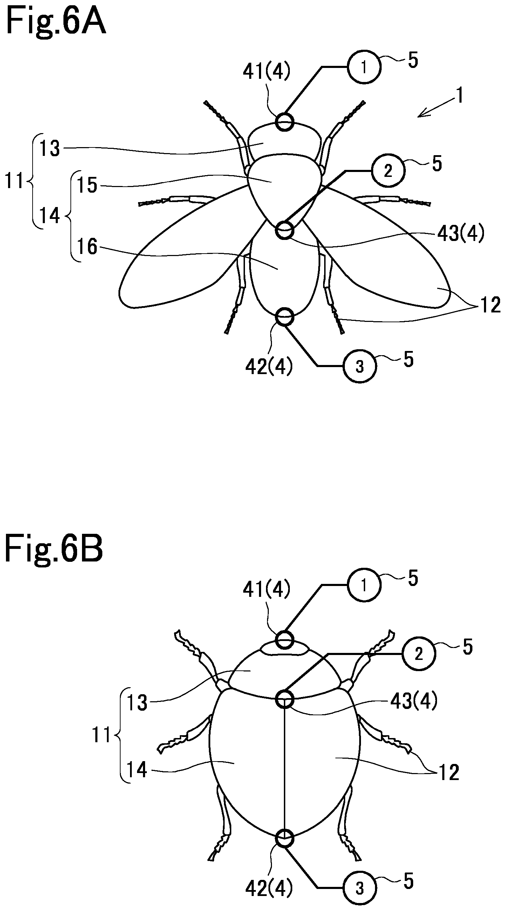

Next, a description will be given on a method for generating the bug identification image data by processing the pre-processing image data, with reference to Fig. 2 to Fig. 6A and Fig. 6B. The method for generating the bug identification image data of this embodiment is a method configured to generate the bug identification image data as training data for use in machine learning.

As shown in Fig. 2, the method for generating the bug identification image data of this embodiment is a method for generating the bug identification image data by processing the pre-processing image data with the images of the bugs 1, as described above. Specifically, the method for generating the bug identification image data includes: a bug extracting step S1 of extracting the bug data D on the bugs 1 from the pre-processing image data; a part extracting step S2 of extracting a part of each of the bugs 1 in the extracted bug data D; a point information imparting step S3 of imparting point information data 4 to the extracted bug data D; and a sequence information imparting step S4 of imparting sequence information 5 on an order to the point information data 4. In the method for generating the bug identification image data of this embodiment, one of all these steps above is executed for all of the bug data D before proceeding to the next step to be executed. Further, in this embodiment, each of the steps is manually carried out.

The bug extracting step S1 is a step of executing a bug finding step S11 of finding the bug 1 in the image corresponding to the pre-processing image data, and a bug identifying step S12 of identifying the found bug 1. That is, in the bug extracting step S1, the bug 1 is found in the bug finding step S11, and the data to which information for identifying the found bug 1 is added is extracted as the bug data D in the bug identifying step S12.

The bug finding step S11 is a step of finding the bug 1 in the image corresponding to the pre-processing image data by processing the pre-processing image data. In the bug finding step S11 of this embodiment, a portion with characteristics of the bug 1 is found from the image corresponding to the pre-processing image data; specifically, when a portion of the image having a color different from that of the background has an outline in a specific shape, the portion surrounded by the outline is determined as one bug 1.

As shown in Fig. 4, the bug identifying step S12 is a step including a frame information imparting step of imparting frame information, which relates to information on a frame F that surrounds the bug 1 found in the bug finding step S11; an extracting step of extracting bug data based on the frame information imparted in the frame information imparting step; and a type information imparting step of imparting type information, which relates to a type of the found bug 1. That is, in the bug identifying step S12 of this embodiment, the information on an area in which the bug 1 is in the image corresponding to the pre-processing image data and the information on the type of the bug 1 are identified to extract the bug data D on the identified bug 1.

The frame information imparting step is a step of identifying an area in the pre-processing image data occupied by the found bug 1 to impart the frame information on the frame F that surrounds the area in which the bug 1 occupies. Specifically, the frame information imparting step is a step of identifying an outer edge of the bug 1 found in the bug finding step S11 to impart information on the frame F that surrounds the outer edge. The frame F corresponding to the frame information imparted in this embodiment has a quadrangular shape, in particular a rectangular shape, and, for example, two coordinates located respectively at angles diagonal to each other of the rectangular frame F are imparted as the frame information.

In the extracting step, the bug data D is extracted based on the frame information. Specifically, in the extracting step, the data obtained by surrounding, with the frame F, the area in which the bug 1 found in the bug finding step S11 is located is extracted as the bug data D. That is, the bug data D is image data extracted by surrounding with the frame F the area of the pre-processing image data in which the bug 1 is located.

The type information imparting step is a step of identifying a type of the found bug 1 (specifically, a type in classification necessary for identifying a source of the bug 1 to be described later, which is for example a family in biological taxonomy to which the bug 1 belongs) to impart information on the type of the bug 1 to the bug data D. Herein, the information on the type to be imparted is information that enables identification of the type of the bug 1, which is for example a type name of the bug 1 or an identifier on the type of the bug 1. In the type information imparting step, information on the type name of the bug 1 surrounded by the frame F corresponding to the frame information is imparted to the bug data D.

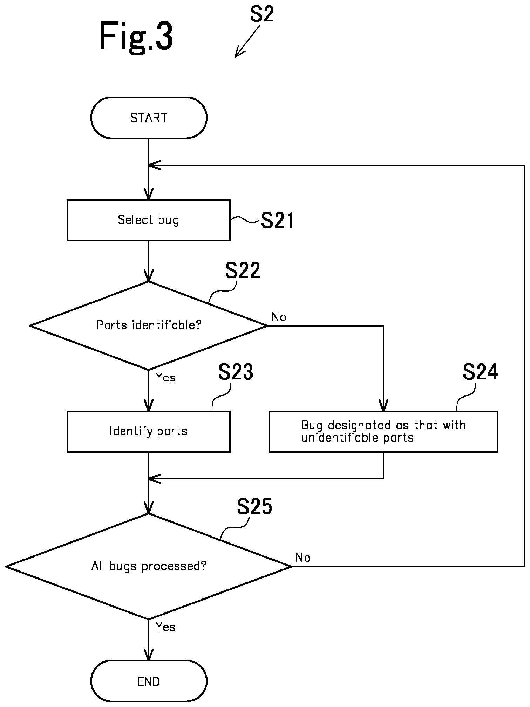

As shown in Fig. 2 and Fig. 3, the part extracting step S2 is a step of extracting a part of the bug 1 corresponding to each extracted bug data D. In the part extracting step S2 of this embodiment, determined is whether or not the part of the bug 1 corresponding to each bug data D is identifiable, and when identifiable, the part of the bug 1 corresponding to the bug data D is identified and extracted. Specifically, the part extracting step S2 includes a selecting step S21 of selecting the bug 1 corresponding to the bug data D subjected to processing; an identifiability determining step S22 of determining whether the part of the bug 1 corresponding to the bug data D selected in the selecting step S21 is identifiable; an identifying step S23 of identifying and extracting the part of the bug 1 corresponding to the bug data D from which the part is identifiable; and a non-designation processing step S24 of designating that no part is identified for the bug 1 corresponding to the bug data D from which the part is unidentifiable. In the part extracting step S2 of this embodiment, whether there is any unprocessed bug data D is determined, and when there is unprocessed bug data D, a repeating step S25 of repeatedly executing the steps in the part extracting step S2 is executed.

A description will be herein given on a structure of the bug 1 with reference to Fig. 4 to Fig. 6A and Fig. 6B. The bug 1 includes a head 13, a body 11 connected to the head 13 and having a trunk 14 at least including an abdomen 16, and an appendage 12 extending outward from the body 11. The appendage 12 includes, for example, antennae, legs, and wings. The structure of the body 11 varies by bug 1. For example, the body 11 of an insect includes: the head 13, and a thorax 15 and the abdomen 16 which fall under the trunk 14. The body 11 of a spider includes a cephalothorax as the head 13, and the abdomen 16 as the trunk 14. In this embodiment, a description will be given on the premise that the part of the bug 1 refers to any part in the body 11 of the bug 1.

As shown in Fig. 3, the selecting step S21 is a step of selecting, as an object to be processed, one bug 1 from the bugs 1 corresponding to the plurality of extracted bug data D. Further, in the selecting step S21, selected is the bug 1 corresponding to the unprocessed bug data D for which processing is not completed in the part extracting step S2.

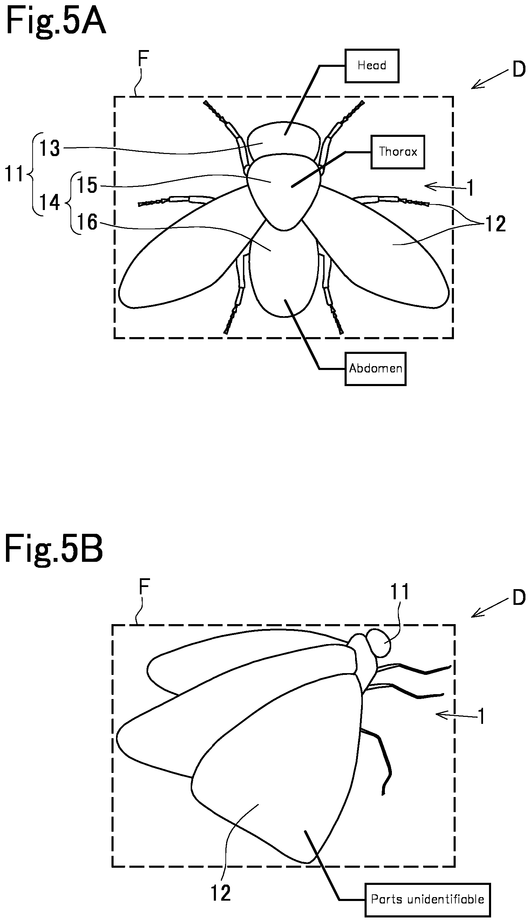

The identifiability determining step S22 is a step of determining whether the part of the bug 1 corresponding to the selected bug data D is identifiable. In the identifiability determining step S22 of this embodiment, it is determined whether various parts are apparent to the extent identifiable in the image of the bug 1 corresponding to the selected bug data D; and when the parts are apparent to the extent identifiable, the parts of the bug 1 corresponding to the selected bug data D are determined to be identifiable. In the identifiability determining step S22 of this embodiment, the parts are determined to be identifiable if at least the head 13 and the trunk 14 are identifiable. For example, when a boundary between the parts (i.e., the head 13 and the trunk 14) in the body 11 of the bug 1 corresponding to the bug data D is recognizable as shown in Fig. 5A, the parts of the bug 1 are determined to be identifiable. In contrast, when the body 11 of the bug 1 corresponding to the bug data D is hidden by the appendage 12 (specifically a wing), another bug 1, dust, or the like to render the boundary between the head 13 and the trunk 14 unidentifiable as shown in Fig. 5B, the parts are determined to be unidentifiable. Further, in the identifiability determining step S22, the parts are determined to be unidentifiable when the parts of the bug 1 corresponding to the bug data D are unidentifiable, such as when the bug 1 is crushed or damaged on the trapping surface 2a to have the parts to be partially lost or separated from the body 11. In this embodiment, even if the bug 1 corresponding to the bug data D is partially crushed or hidden, the parts of the bug 1 are still determined to be identifiable as long as the body 11 of the bug 1 is identifiable to the extent that the parts are recognizable.

The identifying step S23 is a step of identifying and extracting the parts of the bug 1 corresponding to the bug data D that are determined to be identifiable in the identifiability determining step S22. Specifically, the identifying step S23 is a step of identifying and extracting areas of the image data in which the parts of the bug 1 corresponding to the bug data D are located. For example, in the identifying step S23, when the entire body 11 of the bug 1 corresponding to the bug data D is recognizable and boundaries among the head 13, the thorax 15, and the abdomen 16 are recognizable, as shown in Fig. 5A, the area in which the head 13 is located, the area in which the thorax 15 is located, and the area in which the abdomen 16 is located are identified and extracted among the body 11 of the bug 1, and the extracted areas are imparted with information corresponding to the respective extracted parts. Further, in the identifying step S23, when the boundary between the head 13 and the thorax 15 of the bug 1 corresponding to the bug data D is recognizable but the boundary between the thorax 15 and the abdomen 16 is not recognizable, or when the bug 1 has the trunk 14 that does not include at least one of the thorax 15 and the abdomen 16 (e.g., spider) (as in the case, for example, shown in Fig. 6B), at least two or more parts namely the area in which the head 13 is located and the area in which the trunk 14 is located are identified and extracted, and the extracted areas are imparted with information corresponding to the respective extracted parts.

The non-designation processing step S24 is a step of designating that the parts are not identified for the bug 1 corresponding to the bug data D with the parts determined to be unidentifiable in the identifiability determining step S22. The bug 1 corresponding to the bug data D with the parts determined to be unidentifiable in the non-designation processing step S24 is imparted with information that the parts are unidentifiable, as shown in, for example, Fig. 5B.

The repeating step S25 is a step of determining whether there is any bug 1 corresponding to the unprocessed bug data D that is not processed in the part extracting step S2, and repeatedly executing the steps in the part extracting step S2 when there is any unprocessed bug 1. Specifically, in the repeating step S25, when a plurality of bug data D included in the pre-processing image data include any bug data D that is not processed in the identifying step S23 or in the non-designation processing step S24, it is determined that there is a bug 1 corresponding to the unprocessed bug data D, and the processing moves to the selecting step S21. The repeating step S25 ends the part extracting step S2 when the processing in the identifying step S23 or in the non-designation processing step S24 is completed for all bug data D included in the pre-processing image data.

As shown in Fig. 2, the point information imparting step S3 is a step of imparting the point information data 4 to at least three points designated from among the bug data D. Further, in the point information imparting step S3, the point information data 4 are imparted to the three points designated on the surface of the bug 1 corresponding to the bug data D; specifically, the point information data 4 are imparted to the three points designated away from each other in a length direction of the body 11 of the bug 1 (i.e., direction extending to connect the head and the abdomen of the bug 1). That is, the point information imparting step S3 is a step of imparting the point information data 4 to the at least three points within the area in which the bug 1 corresponding to the bug data D is located out of the pre-processing image data, and specifically imparts the point information data 4 to the at least three points within the area in which the parts of the bug 1 extracted in the part extracting step S2 are located. The point information imparting step S3 of this embodiment is a step of imparting the point information data 4 to allow the three points to correspond to two or more parts out of the plurality of parts of the body 11 of the bug 1 corresponding to the bug data D, and for example, imparting the point information data 4 to the three points that correspond to the head 13 and the trunk 14. As shown in Fig. 6A and Fig. 6B, in the point information imparting step S3 of this embodiment, the point information data 4 are imparted, for the bug 1 corresponding to each bug data D, to at least the position corresponding to the head 13 of the bug 1 and the position corresponding to the trunk 14 of the bug 1; specifically, the point information data 4 are imparted to three points designated as: a head-corresponding point 41 corresponding to the head 13 of the bug 1, an abdomen-corresponding point 42 corresponding to the abdomen 16 of the bug 1, and an intermediate point 43 located between the head-corresponding point 41 and the abdomen-corresponding point 42. In the point information imparting step S3 of this embodiment in which the point information data 4 are imparted on the basis of the parts of the bug 1 corresponding to the bug data D as described above, the point information data 4 are imparted to the bug data D from which the parts are extracted in the part extracting step S2, but no point information data 4 are imparted to the bug data D for which the parts are determined to be unidentifiable in the part extracting step S2. In this embodiment, the point information data 4 are incidental information indicating the coordinates in the bug data D, but the configuration is not limited thereto, and can be such that points are overwritten on an image of a bug as the bug data D and the overwritten points are handled as the point information data 4.

The head-corresponding point 41 is a point designated at a leading end of the head 13 (i.e., an end on the head side in the length direction of the body 11), and designated at a substantially center in a width direction of the body 11 (i.e., a direction orthogonal to the length direction of the body 11 in the image of the bug 1 corresponding to the bug data D). That is, the head-corresponding point 41 is a point designated at a leading end of the body 11 of the bug 1 and at the substantially center in the width direction of the body 11. The abdomen-corresponding point 42 is a point designated at a rear end of the abdomen 16 (i.e., an end on the abdomen side in the length direction of the body 11), and designated at the substantially center in the width direction of the body 11. That is, the abdomen-corresponding point 42 is a point designated at a rear end of the trunk 14 (i.e., a rear end of the body 11 of the bug 1) and at the substantially center in the width direction of the body 11.

The intermediate point 43 is a point designated at an intermediate part in the length direction of the body 11 of the bug 1. The intermediate point 43 is a point designated at the substantially center in the width direction of the bug 1, and in this embodiment located at the trunk 14. Further, the intermediate point 43 is a point located at a feature point of the body 11 of the bug 1. The feature point refers to a visually characteristic point of the bug 1, such as a position identifiable based on a characteristic point within the parts, examples of which include: a boundary between parts, a base of a wing or a pattern of the bug 1, and a central position between a leading end and a rear end of each part of the bug 1. The central position between the leading end and the rear end of each part of the bug 1 means, for example, a central position between the leading end and the rear end of the abdomen, or a central position between the leading end and the rear end of the trunk. For the bug 1 shown in Fig. 6A, for example, a position of the intermediate point 43 is designated assuming that a central portion in the width direction of a boundary position between the thorax 15 and the abdomen 16 serves as the feature point. For the bug 1 shown in Fig. 6B (e.g., order Coleoptera), a position of the intermediate point 43 is designated assuming that the base portion of the wing out of the trunk 14 serves as the feature point. In the point information imparting step S3 of this embodiment, when a boundary between parts of the body 11 of the bug 1 corresponding to the bug data D is recognizable, the boundary between the parts is regarded as the feature point, and when a boundary between parts of the body 11 of the bug 1 corresponding to the bug data D is not recognizable and a point that is characteristic within a part is recognizable, the point that is characteristic within the part is regarded as the feature point.

The sequence information imparting step S4 is a step of imparting the sequence information 5 on an order to the point information data 4 on the three points imparted in the point information imparting step S3. The sequence information 5 is information on the order to be imparted to the point information data 4 for identifying the posture of the bug 1 corresponding to the bug data D, and specifically information on the order in which the head-corresponding point 41, the intermediate point 43, and the abdomen-corresponding point 42 are arranged in a specific order. Further, the sequence information 5 is information on the order of arrangement in the length direction of the body 11 of the bug 1, and in this embodiment, information on the order from the leading end side (head side) to the rear end side (abdomen side) as shown in Fig. 6A and Fig. 6B. That is, in the sequence information imparting step S4, the sequence information 5 are imparted to the point information data 4 based on the order of arrangement of the parts of the body 11 of the bug 1, and imparted in this embodiment are the sequence information 5 on the order of the head-corresponding point 41, the intermediate point 43, and the abdomen-corresponding point 42. The sequence information data 5 are incidental data to be imparted to the bug data D. Further, in the sequence information imparting step S4 of this embodiment in which the sequence information 5 are imparted to the point information data 4, no sequence information 5 is imparted to the bug data D to which no point information data 4 is imparted in the point information imparting step S4 (i.e., to the bug data D for which the parts are determined to be unidentifiable in the part extracting step S2) .

The bug identification image data as described above is used to identify bugs. As will be described later, the bug identification image data is used for machine learning. In any of the above usage methods, the point information data 4 and the sequence information data 5 reveal the postures of the bugs, thereby increasing bug identification accuracy.

As described above, in the method for generating the bug identification image data of this embodiment, the pre-processing image data is subjected to the processings in the above steps to generate the bug identification image data.

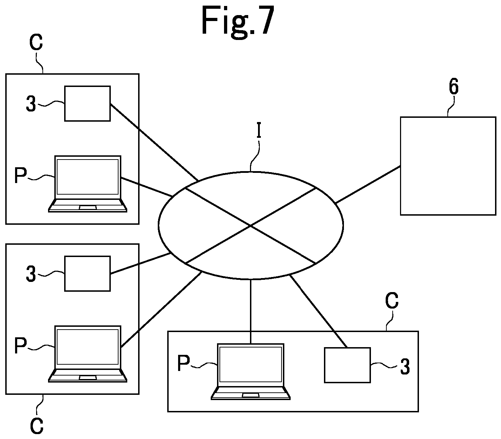

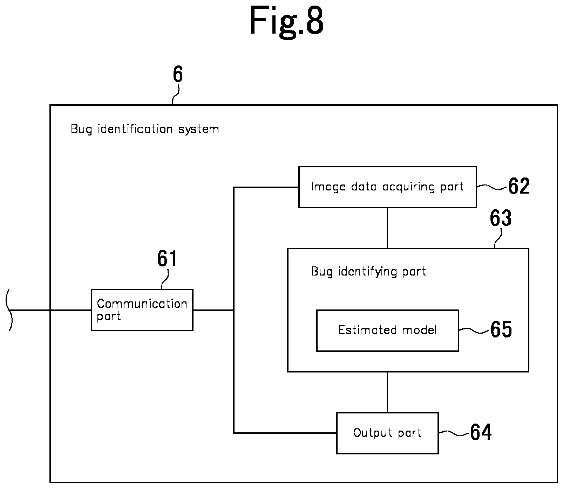

Next, a description will be given on a bug identification system 6 with reference to Fig. 7 and Fig. 8.

As shown in Fig. 7, the bug identification system 6 is a system for identifying the bug 1 in the image data transmitted from a client terminal C (the image capturing apparatus 3 in this embodiment) via the Internet I. Specifically, the bug identification system 6 is a system configured to allow a client to process an object image data obtained by capturing an image of a bug trapped specimen to identify and output the bug 1 in the object image data. In this embodiment, the object image data is captured by the image capturing apparatus 3 described above, and transmitted to the bug identification system 6 using a communication device incorporated in the image capturing apparatus 3.

As shown in Fig. 8, the bug identification system 6 includes a communication part 61 for communication with the outside, an image data acquiring part 62 for acquiring the object image data from the outside, a bug identifying part 63 for identifying the type of the bug 1 in the object image data, and an output part 64 for outputting an identification result by the bug identifying part 63. The image data acquiring part 62 is configured to acquire the object image data from the client terminal C (image capturing apparatus 3) via the communication part 61 and the Internet I. The output part 64 is configured to output the identification result to the client terminal C (specifically, the client's computer P, tablet terminal, or the like) via the communication part 61 and the Internet I. Such a bug identification system 6 is achieved by a computer. Specifically, the bug identification system 6 of this embodiment is achieved when the computer is configured to function as the communication part 61 for communication with the outside, the image data acquiring part 62 for acquiring the object image data from the outside, the bug identifying part 63 for identifying the type of the bug 1 in the object image data, and the output part 64 for outputting the identification result by the bug identifying part 63.

The bug identifying part 63 is configured to identify the type of the bug 1 in the object image through a learned model 65 constructed by machine learning using training data. The learned model 65 is constructed by machine learning using, as the training data, the bug identification image data generated by the aforementioned method for generating the bug identification image data.

The training data of the learned model 65 includes: the pre-processing image data as the training image data with the image of the bug 1; the posture information that includes the point information data 4 imparted to the at least three points designated from among the bug data D on the bug 1 in the training image data and the sequence information 5 on the order imparted to the point information data 4; and the type information on the type of the bug 1 in the training image data. The point information data 4 are identical to the point information data 4 imparted in the point information imparting step S3, the sequence information 5 are identical to the sequence information 5 imparted in the sequence information imparting step S4, and the type information is identical to the type information imparted in the type information imparting step. The training data of this embodiment is data to which the frame information on the frame F surrounding the bug 1 in the training image data is imparted. The frame information is identical to the frame information imparted in the frame information imparting step.

The learned model 65 is constructed by so-called supervised learning, which uses, as the training data, the bug identification image data generated by the aforementioned method for generating the bug identification image data. That is, the learned model 65 is a model constructed by imparting, to a machine learning algorithm, a large number of bug identification image data to which the type information is added.

Such a bug identifying part 63 processes the object image data to find the bug 1 in the object image data and identify the type of the found bug 1. The bug identifying part 63 of this embodiment is configured to impart the type information of the found bug 1 to the object image data to output the number of bugs 1 per type as the identification result. In this embodiment, classification at a family level is employed as the type of the bug 1.

The method for generating the bug identification image data configured as above, in which the point information data 4 and the sequence information 5 are imparted to the extracted bug 1, enables the posture of the bug 1 to be determined based on the point information data 4 and the sequence information 5, and can thereby properly identify the type of the bug 1 even when the bug 1 is, for example, bent. This can increase the identification accuracy of the bug 1 in the image data.

The configuration that the frame information is imparted to the extracted bug 1 allows the bug 1 to be easily and properly identified even when a plurality of bugs 1 overlap each other.

Further, the configuration that the point information data 4 are designated on two or more parts and the point information data 4 are imparted based on the order of arrangement of the parts allows the posture of the bug 1 to be properly determined when the bug 1 is bent.

The configuration that the posture of the bug 1 can be determined based on at least three points including the head-corresponding point 41, the abdomen-corresponding point 42, and the intermediate point 43 allows the posture of the bug 1 to be properly determined even when the bug 1 is bent.

Furthermore, the configuration that the point information data 4 is imparted to the feature point as the intermediate point 43 allows the point information data 4 to be imparted to substantially the same positions of the bugs 1 if these bugs 1 are of the same type.

The image capturing apparatus 3 configured to illuminate the bug 1 from both sides of the travelling area can suppress the bug 1 from casting a shadow. Further, the image capturing apparatus 3 configured to connect the plurality of images to each other to generate the pre-processing image data can suppress the bug 1 of the pre-processing image data from blurring.

Further, the configuration that includes the type information imparting step of imparting the type information on the type of the bug 1 allows the image data including the bug 1 to be used as the training data even when the bug 1 in the image data is bent.

The configuration includes the part extracting step S2 of extracting the parts of the bug 1 corresponding to the bug data D from the bug data D extracted before the point information imparting step S3, and at least the head 13 and the abdomen 16 of the bug 1 are extracted in the part extracting step S2. This configuration allows the point information data 4 to be properly imparted to the parts of the body 11 of the bug 1 in the point information imparting step S3.

Further, the part extracting step S2 includes the identifiability determining step S22 of determining whether or not the parts can be extracted from the extracted bug data D, and the parts are extracted only from those bug data D from which the parts are determined to be extractable in the identifiability determining step S22, among all extracted bug data D. In the point information imparting step S3, the point information data 4 is imparted only to those bug data D from which the parts are extracted. This configuration can securely impart the point information data 4 to the parts of the bug 1 corresponding to the bug data D.

Further, in the point information imparting step S3, the point information data 4 are imparted to the at least three points designated from among the body 11 of the bug 1. This configuration allows the posture of the bug 1 to be securely identified regardless of the condition of the appendage 12 such as an appendage of an insect.

In the sequence information imparting step S4, the sequence information 5 are imparted in the order of the head-corresponding point 41, the intermediate point 43, and the abdomen-corresponding point 42, or in the order of the abdomen-corresponding point 42, the intermediate point 43, and the head-corresponding point 41. The configuration that the sequence information 5 are imparted along the length direction of the body 11 allows the posture of the bug 1 to be securely identified.

Further, according to the bug identification system 6 configured as above, the learned model 65 is constructed by machine learning using the training data including the posture information that includes the point information data 4 and the sequence information 5 on the at least three points designated from among the bug data D included in the training image data. Thus, the type of the bug 1 can be properly identified even when the bug 1 is, for example, bent.

The following describes a result of comparison made by the present inventors between the bug identification system 6 using the above learned model 65 and a known bug identification system using a known leaned model constructed with training data that does not include any information on postures of bugs such as the point information data 4 or the sequence information 5 but is obtained only by imparting types of bugs to images of the bugs. When the bugs 1 were identified using the same bug trapped specimen, the known bug identification system had an identification accuracy of about 60.0% whereas the bug identification system 6 using the learned model 65 according to the present invention had an identification accuracy of about 79.1%. There were some cases where the known bug identification system failed to identify bugs 1 as the bugs 1 when the bugs 1 densely gathered in the pre-processing image, thereby decreasing the accuracy in identifying the bugs 1 (specifically, the accuracy was reduced from 90.0% or more to 80.0% or less), but the bug identification system 6 using the above learned model 65 could successfully maintain the accuracy in identifying the bugs 1 (roughly 90.0% or more) even when the bugs 1 densely gathered.

The embodiments of the present invention have been described by way of example, but the present invention is not limited to the aforementioned embodiments, and various modifications can be made without departing from the gist of the present invention.

The description has been given by taking, for example, the case where the image data as the training data is generated using the method for generating the bug identification image data, without limitation thereto. For example, the method for generating the bug identification image data can be used as pre-processing for an operation in manually or mechanically identifying the bugs 1 in the image data. Specifically, the method for generating the bug identification image data according to the present invention can be applied to specimen image data obtained by capturing an image of the trapped specimen 2 to obtain identification operation data as the bug identification image data, so that the specimen image data as the pre-processing image data can be used for the identification operation.

The description has been given by taking, for example, the case where information is manually imparted to the pre-processing image data to generate the bug identification image data, without limitation thereto. For example, the configuration can be such that information is mechanically imparted to the pre-processing image data in all or part of the steps. In the case where information is mechanically imparted to the pre-processing image data in all of the steps, the method can be configured as a method for generating the bug identification image in which the computer executes the bug extracting step S1, the part extracting step S2, the point information imparting step S3, and the sequence information imparting step S4 to generate the bug identification image.

Further, the description has been given by taking, for example, the case where each of the steps is executed for all bugs 1 before moving on to the next step, without limitation thereto. For example, the configuration can be such that all of the steps are executed for one bug 1, followed by these steps executed for the next bug 1. Each of the steps can be independently executed for a plurality of bugs 1.

The description has been given by taking, for example, the case where the type information imparting step is included in which the type information on the type of the bug 1 is imparted to the bug data D extracted in the bug extracting step S 1, without limitation thereto. For example, the configuration can be such that no type information on the bug 1 is imparted when the method for generating the bug identification image data is used as pre-processing for the operation in identifying the bug 1.

Further, the description has been given by taking, for example, the case where, as the frame information imparting step, the frame information on the quadrangular frame F for surrounding the bug 1 in the image is imparted in the bug extracting step S1, without limitation thereto. For example, the configuration can be such that the frame information on a frame having a shape other than a quadrangular shape, such as a circular shape or a shape conforming to the outline of the bug 1, or such that no frame F is imparted, that is, no frame information imparting step is included.

The description has been given by taking, for example, the case where, in the part extracting step S2, whether the parts can be extracted from the bug 1 corresponding to the bug data D is determined, and the parts of the bug 1 are extracted only from the bug data D from which the parts are determined to be extractable, without limitation thereto. The configuration can be such that the parts of the bugs 1 are extracted from all bug data D.

Further, the description has been given by taking, for example, the case where the part extracting step S2 is included, but the configuration can be such that no part extracting step S2 is included. When the part extracting step S2 is not included, the configuration can be, for example, such that the point information data 4 are imparted to three points at one end, the other end, and a position therebetween of the body 11 from among the bug data D in the point information imparting step S3, and the sequence information 5 are imparted to the point information data 4 in the order from the one end toward the other end in the sequence information imparting step S4. In this case, the point information data 4 are imparted to allow at least three points to substantially correspond to two or more parts of the bug 1. In the case of the aforementioned configuration, for example, the one end of the body 11 can be determined as a position at which an antenna of the bug 1 is located. In the case of, for example, the bug 1 with the small head 13 and the large trunk 14, the configuration can be such that the point information data 4 are imparted to three or more points on the trunk 14, and that the sequence information 5 are imparted to these points in the order from, for example, the one on the side of the head 13. Further, the description has been given by taking, for example, the case where the point information data 4 are imparted only to the body 11, without limitation thereto. The configuration can be such that the point information data 4 are imparted to the antennae, the legs, and the wings as the appendages 12. For example, the configuration can be such that the point information data 4 is imparted to one or more points on each of the leading ends of the antennae, the body 11, and the legs, and that the sequence information 5 are imparted to these points in order from the antennae. In any case, the point information data 4 and the sequence information 5 are imparted to three or more points away from each other to the extent that the posture of the bug 1 can be estimated, thereby increasing an identification accuracy of the bug 1. When the point information data 4 are imparted to four or more points, the posture can be accurately determined.

The configuration can be such that line information obtained by connecting the point information data 4 to each other in conformity with the sequence information 5 imparted to the bug data D in the sequence information imparting step S4 is imparted. The imparted line information allows the posture of the bug 1 to be easily determined. The configuration can further be such that information on an area surrounded by a line connecting the points imparted to the bug data D in the point information imparting step S3 is imparted. When the information on the area is imparted, the bug 1 can be determined as being significantly bent if the area surrounded by the three points imparted as the point information data 4 in the point information imparting step S3 is large.

The description has been given by taking, for example, the case where the image data acquiring part 62 in the bug identification system 6 is configured to acquire the image data via the Internet I, without limitation thereto. The configuration can be such that the image data is directly acquired from an apparatus that captures an image of, for example, bug-trapping paper.

The description has been given by taking, for example, the case where the object image data is captured in the same method as the method for capturing the training image data, without limitation thereto. The configuration can be such that the object image data is captured in a method different from the method for capturing the training image data.

Furthermore, the description has been given by taking, for example, the case where the "family" in biological taxonomy is used to define the type of the bug 1, without limitation thereto. Other taxonomic ranks such as the "order", "genus", and "species" can be employed, or a classification not based on biological taxonomy (e.g., classification based on the appearance of organisms, such as "Tipulidae") can also be employed.

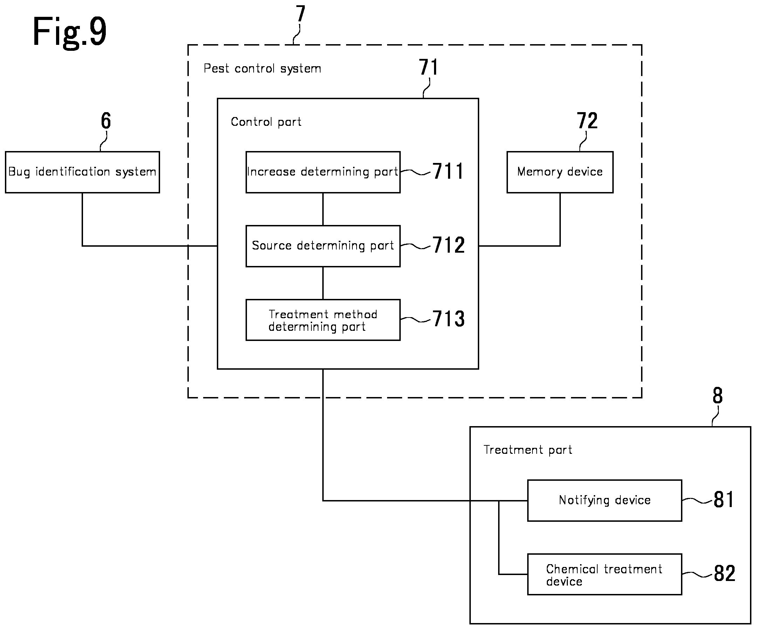

Next, a description will be given on a pest control system 7 with reference to Fig. 9 to Fig. 16. The pest control system 7 is a system for processing to suppress adverse effects caused by bugs when the number of bugs increases or is highly likely to increase. In this embodiment, the pest control system 7 is used to prevent and control bugs in a building (e.g., food factory) and/or bugs invading the building. In the pest control system 7 of this embodiment, the bug identification system 6 is used.

The pest control system 7 executes: detective control (feedback control) involving processing for reducing the number of bugs in the building and/or the number of bugs invading the building in dealing with an increase in the number of bugs; and preventive control (feedforward control) involving processing for preventing the bugs from increasing when the number of bugs in the building and/or the number of bugs invading the building is likely to increase. First, a description will be given on detective control.

As shown in Fig. 9, the pest control system 7 for detective control includes a control part 71 configured to receive information on the identification result from the bug identification system 6 for processing, and a memory device 72 for storing various information, and the pest control system 7 is configured to output a processing result of the control part 71 to a treatment part 8. The bug identification system 6 configured to output the information on the identification result to the pest control system 7 of this embodiment is placed inside and outside the building, and is configured to output, as the identification result, the number of bugs per type in object image data to the control part 71, the object image data being generated (specifically, obtained by capturing and processing images) by the image capturing apparatus 3 disposed for fixed-point observation. The image capturing apparatus 3 captures images of bugs trapped by a plurality of bug trapping apparatuses (e.g., bug-trapping paper) arranged inside and outside the building to generate object image data. That is, the bug identification system 6 of this embodiment outputs the identification result on the number of bugs per type trapped by the bug trapping apparatuses. In this embodiment, the bug identification system 6 is configured to output the identification result at certain time intervals.

The pest control system 7 includes the control part 71 for executing predetermined processing, and the memory device 72 for storing the information on the identification result received from the bug identification system 6. The pest control system 7 of this embodiment is a system configured to identify a type of bugs whose number has increased by a threshold or more based on the information on the identification result received from the bug identification system 6, and output a treatment method D4 corresponding to the identified type of bugs. The pest control system 7 of this embodiment is implemented by cloud computing, without limitation thereto.

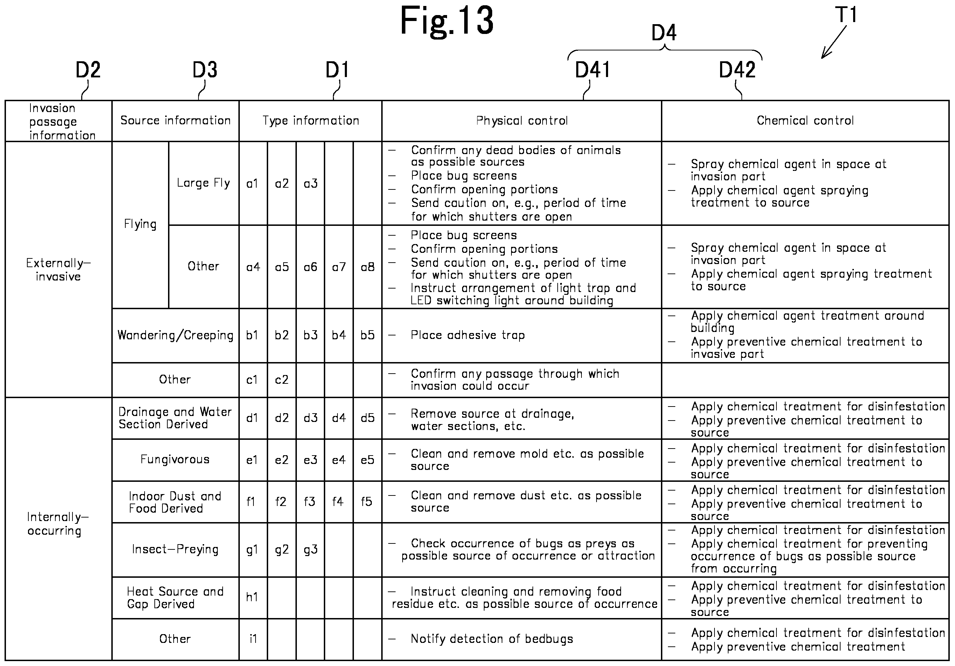

The memory device 72 stores at least a previously-received identification result out of the identification results received from the bug identification system 6. The memory device 72 is capable of transmitting the stored previously-received identification result to the control part 71. Further, the memory device 72 stores database that the control part 71 uses for various determinations (e.g., a table T1 shown in Fig. 13), and transmits the database to the control part 71 according to a request of the control part 71. As shown in Fig. 13, the database stored by the memory device 72 of this embodiment is a database in which invasion passage information D2 and source information D3 are associated with the information on the treatment method D4 for each type of bugs (type information).

The control part 71 includes: an increase determining part 711 configured to compare the identification result received from the bug identification system 6 with the previously-received identification result stored in the memory device 72 to determine whether or not the number of bugs per type has increased by the threshold or more; a source determining part 712 configured to determine the invasion passage information D2 on an invasion passage of the type of bugs and the source information D3 on a source thereof for the type of bugs whose number is determined to have increased by the threshold or more by the increase determining part 711; and a treatment method determining part 713 configured to determine the treatment method D4 for reducing the bugs in the building based on the determination by the source determining part 712.

The increase determining part 711 receives the previously-received identification result from the memory device 72 while receiving the identification result from the bug identification system 6, and compares the previously-received identification result with the latest-received identification result to determine whether or not the number of bugs per type has increased by the threshold or more. That is, the increase determining part 711 of this embodiment determines, per type of bugs, whether or not the number of bugs newly captured by the bug trapping apparatus is equal to or greater than the threshold during a period between when the previous identification result is output and when the latest identification result is output by the bug identification system 6. Such an increase determining part 711 can determine, per type of bugs, whether or not the number of bugs newly captured by the bug trapping apparatus is equal to or greater than the threshold during a specific period of time (i.e., an interval at which the bug identification system 6 outputs an identification result), and can thus determine that a particular type of bugs propagates if there are a large number of bugs of the particular type in the environment in which the bug trapping apparatus is placed. The threshold in this embodiment is a predetermined numerical value, but without limitation thereto, the threshold can be, for example, a value twice as great as the number increased during a normal time.

For the type of bugs determined by the increase determining part 711 to have increased by the threshold or more, the source determining part 712 determines the source information D3 on the source of the type of bugs. That is, when there are a large number of bugs of a particular type in the environment in which the bug trapping apparatus is placed, the source determining part 712 identifies the source of the type of bugs. The source determining part 712 of this embodiment determines the invasion passage information D2 on the invasion passage of the type of bugs determined to have increased, and the source information D3 on the source of the bugs. The invasion passage information D2 is information for determining whether the type of bugs is an externally-invasive type in which the bugs occur outside the building and invade the building, or an internally-occurring type in which the bugs occur inside the building. The source determining part 712 of this embodiment identifies the invasion passage information D2 and the source information D3 on the type of bugs determined to have increased, based on prepared database on invasion passage information D2 and source information D3 per type of bugs.

As shown in Fig. 13, the source information D3 is information for identifying a source of the type of bugs inside the building; and is information for identifying how the bugs of the externally-invasive type invade the building, or information for identifying in what environment the bugs of the internally-occurring type occur inside the building. Specifically, for the externally-invasive type of bugs, the source information D3 is information as to which one of the following four categories the bugs belong to, namely: a Flying Large Fly to which those bugs belonging to large flies and flying into the building (e.g., houseflies, flesh flies, blowflies) belong; an Other Flying to which those bugs other than large flies and flying into the building (e.g., Diptera insects other than the large flies, thrips, moths, caddisflies, ponerine ants, bees, planthoppers, leafhoppers, aphids) belong; a Wandering/Creeping to which those bugs wandering or creeping into the building (e.g., ants, earwigs, crickets, springtails, centipedes, millipedes, house centipedes, common rough woodlouse, ticks, spiders, ground beetles, stink bugs) belong; and an Other to which those bugs not belonging to any of the above (e.g., mice) belong. For the internally-occurring type of bugs, the source information D3 is information as to which one of the following six categories the bugs belong to, namely: a Drainage and Water Section Derived to which those bugs occurring from water sections such as drainage (e.g., drain flies, vinegar flies, Phorid flies, Scatopsidae flies, Sphaeroceridae flies, Desmometopa singaporensis) belong; a Fungivorous to which those bugs occurring from fungi (e.g., winged booklice, Liposcelididae booklice, Stephostethus chinensis, rove beetles) belong; an Indoor Dust and Food Derived to which those bugs occurring from indoor dust and food (e.g., Psocoptera, silverfish, skin beetles, Acaridae, death-watch beetles, flat bark beetles, spider beetles, pyraloid moths) belong; an Insect-Preying to which those bugs occurring by preying on insects (e.g., Araneae, such as Oecobiidae, Oecobiidae, and Salticidae) belong; a Heat Sourcevs and Gaps Derived to which those bugs occurring from heat sources and gaps (e.g., cockroaches) belong; and an Other to which those internally occurring bugs not belonging to any of the above (e.g., bedbugs) belong.

The source determining part 712 of this embodiment determines the invasion passage information D2 and the source information D3 for the type of bugs determined by the increase determining part 711 to have increased, with reference to the table T1 as shown in Fig. 13; specifically, acquires the invasion passage information D2 and the source information D3 corresponding to the type of bugs determined to have increased, with reference to the type information D1 in the table T1. Specifically, when the type of bugs determined to have increased falls under any one of a1, a2, and a3, the source determining part 712 determines that the type of bugs having increased is the externally-invasive type and categorized as the Flying Large Fly. When the types of bugs having increased fall under the same category of the source information D3, the source determining part 712 outputs only one category as the category of the bugs having increased. For example, when the type of bugs determined to have increased falls under some of a4, a5, a6, a7, and a8, the source determining part 712 determines that the type of bugs having increased is the externally-invasive type and categorized as the Other Flying.

The treatment method determining part 713 determines and outputs the treatment method D4 for reducing the bugs, based on the source information D3 determined by the source determining part 712. The treatment method determining part 713 of this embodiment outputs, as the treatment method D4 for reducing the bugs, both the treatment method D4 through physical control D41 and the treatment method D4 through chemical control D42 (chemical treatment). The treatment method determining part 713 of this embodiment determines the treatment method D4 with reference to database on the treatment method D4; specifically, determines the treatment method D4 with reference to the table T1 as shown in Fig. 13. For example, when the source determining part 712 determines that the category on the source of the type of bugs having increased is the Flying Large Fly, the treatment method determining part 713 outputs, as the physical control D41 in the treatment method D4 corresponding to the category of the Flying Large Fly, Confirm any dead bodies of animals as possible sources, Place bug screens, Confirm opening portions, and Send caution on, e.g., period of time for which shutters are open, and outputs, as the chemical control 42, Spray chemical agent in space at invasion part. When the source determining part 712 determines that the type of bugs having increased is the externally-invasive type and categorized as the Other for the source information D3, the treatment method determining part 713 outputs Confirm any passage through which invasion could occur, as the physical control D41 in the treatment method D4 corresponding to the category of the Other. Thus, the treatment method determining part 713 outputs the treatment method D4 separately through the physical control D41 and through the chemical control D42 for each category in the source information D3.

The treatment method determining part 713 determines the type and amount of a chemical agent for use, a method for the chemical treatment, and a place subjected to the chemical treatment for the chemical control D42, and judges whether or not the chemical treatment by the determined method shall be immediately applied. The specific treatment flow will be described later.

The treatment part 8 is configured to apply specific treatment depending on the output of the treatment method determining part 713. The treatment part 8 of this embodiment includes: a notifying device 81 configured to notify, e.g., an administrator of the building of the treatment method D4 relating to the physical control D41 and the chemical control D42 output by the treatment method determining part 713; and a chemical treatment device 82 configured to apply chemical treatment based on the chemical control D42 output by the treatment method determining part 713.

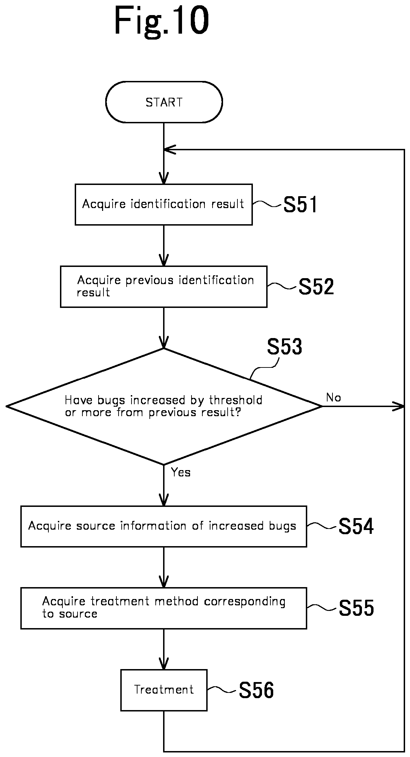

The treatment flow in the pest control system 7 configured as above will be described with reference to Fig. 10 to Fig. 12.

As shown in Fig. 10, the pest control system 7 repeatedly executes a latest result acquiring step S51, a previous result acquiring step S52, an increase determining step S53, a source determining step S54, a treatment method determining step S55, and a treatment outputting step S56.

The latest result acquiring step S51 is a step of acquiring an identification result output by the bug identification system 6 to acquire the number of bugs per type included in the identification result. The latest result acquiring step S51 of this embodiment is executed by the increase determining part 711, and the bug identification system 6 outputs the identification results at specific time intervals to thereby enable the identification results to be acquired at specific time intervals. In the latest result acquiring step S51, the acquired identification results are stored in the memory device 72.

The previous result acquiring step S52 is a step of acquiring an identification result previously output by the bug identification system 6 to acquire the number of bugs per type in the previous identification result included in the identification results. The previous result acquiring step S52 of this embodiment is executed by the increase determining part 711 to acquire the previous identification result from the memory device 72.

The increase determining step S53 is a step of comparing the number of bugs per type included in the latest identification result output by the bug identification system 6 with the number of bugs per type included in the previously-output identification result, determining whether or not the number of bugs per type has increased by the threshold or more, and outputting the type of bugs whose number has increased by the threshold or more. In the increase determining step S53, when the number of bugs is not determined to have increased by the threshold or more for any type (i.e., NO in the increase determining step S53), the step moves to the latest result acquiring step S51, and when the number of bugs is determined to have increased by the threshold or more for one or more types (i.e., YES in the increase determining step S53), the step moves to the source determining step S54. The increase determining step S53 of this embodiment is executed by the increase determining part 711.

The source determining step S54 is a step of determining the invasion passage information D2 and the source information D3 for the type of bugs determined to have increased by the threshold or more in the increase determining step S53. Specifically, the source determining step S54 is a step of identifying the source of the type of bugs determined to have increased by the threshold or more in the increase determining step S53, by referring to the invasion passage information D2 and the source information D3 in the database (i.e., in this embodiment the table T1 shown in Fig. 13). For example, in the increase determining step S53, when the number of bugs has increased for the type falling under one or more of a1, a2, and a3, the type of the increased bugs is determined to fall under the category Flying Large Fly of the externally-invasive type; when the number of bugs has increased for the type falling under one or more of a4, a5, a6, a7, and a8, the type of the increased bugs is determined to fall under the category Other Flying of the externally-invasive type; when the number of bugs has increased for the type falling under one or more of b1, b2, b3, b4, and b5, the type of the increased bugs is determined to fall under the category Wandering/Creeping of the externally-invasive type; and when the number of bugs has increased for the type falling under c1 or c2, the type of the increased bugs is determined to fall under the category Other of the externally-invasive type. Further, in the source determining step S54, when the number of bugs has increased for the type falling under one or more of d1, d2, d3, d4, and d5, the type of the increased bugs is determined to fall under the category Drainage and Water Section Derived of the internally-occurring type; when the number of bugs has increased for the type falling under one or more of e1, e2, e3, e4, and e5, the type of the increased bugs is determined to fall under the category Fungivorous of the internally-occurring type; when the number of bugs has increased for the type falling under one or more of f1, f2, f3, f4, and f5, the type of the increased bugs is determined to fall under the category Indoor Dust and Food Derived of the internally-occurring type; when the number of bugs has increased for the type falling under one or more of g1, g2, and g3, the type of the increased bugs is determined to fall under the category Insect-Preying of the internally-occurring type; when the number of bugs has increased for the type falling under h1, the type of the increased bugs is determined to fall under the category Heat Source and Gap Derived of the internally-occurring type; and when the number of bugs has increased for the type falling under i 1, the type of the increased bugs is determined to fall under the category Other of the internally-occurring type. In the source determining step S54, the sources are determined for all types of bugs determined to have increased by the threshold or more in the increase determining step S53. The source determining step S54 is executed by the source determining part 712.

The treatment method determining step S55 is a step of determining the treatment method D4 corresponding to the source of the type of increased bugs. Specifically, it is a step of determining a treatment for reducing the increased bugs based on the invasion passage information D2 and the source information D3 determined in the source determining step S54. In the treatment method determining step S55 of this embodiment, the treatment method D4 corresponding to the source information D3 is output with reference to the database (e.g., the table T1 shown in Fig. 13). In the treatment method determining step S55, the physical control D41 and the chemical control D42 in the treatment method D4 are separately output. For example, in the treatment method determining step S55, when the number of bugs has increased for the type falling under the category Flying Large Fly, output as the physical control D41 are: Confirm any dead bodies of animals as possible sources; Place bug screens; Confirm opening portions; and Send caution on, e.g., period of time for which shutters are open, and output as the chemical control D42 are: Spray chemical agent in space at invasion part; and/or instruction to Apply chemical agent spraying treatment to source. When the number of bugs has increased for the type falling under the category Other Flying, output as the physical control D41 are: Place bug screens; Confirm opening portions; Send caution on, e.g., period of time for which shutters are open; and Instruct arrangement of light trap and LED switching light around building, and output as the chemical control D42 are: Spray chemical agent in space at invasion part; and/or instruction to Apply chemical agent spraying treatment to source. When the number of bugs has increased for the type falling under the category Wandering/Creeping, output as the physical control D41 is Place adhesive trap, and output as the chemical control D42 are: Apply chemical agent treatment around building; and Apply preventive chemical treatment to invasive part. When the number of bugs has increased for the type under the category Other of the externally-invasive type, Confirm any passage through which invasion could occur is instructed as the physical control D41. Further, in the treatment method determining step S55, when the number of bugs has increased for the internally-occurring type as the invasion passage information D2, output as the physical control D41 is instruction to clean the position corresponding to the source information D3, and output as the chemical control D42 are: Apply chemical treatment for disinfestation; and Apply preventive chemical treatment to source. Specifically, in the treatment method determining step S55, Remove source at drainage, water sections, etc. is output when the number of bugs has increased for the type falling under the category Drainage and Water Section Derived; Clean and remove mold etc. as possible source is output when the number of bugs has increased for the type falling under the category Fungivorous; Clean and remove dust etc. as possible source is output when the number of bugs has increased for the type falling under the category Indoor Dust and Food Derived; Check occurrence of bugs as possible source of occurrence or attraction is output when the number of bugs has increased for the type falling under the category Insect-Preying; and Clean and remove food residue etc. as possible source of occurrence is output when the number of bugs has increased for the type falling under the category Heat Source and Gap Derived, as the physical control D41. As the chemical control D42, output are Apply chemical treatment for disinfestation and Apply preventive chemical treatment to source when the number of bugs has increased for the type falling under the category Drainage and Water Section Derived, Fungivorous, Indoor Dust and Food Derived, or Heat Source and Gap Derived; and output are Apply chemical treatment for disinfestation and Apply chemical treatment for preventing occurrence of bugs as possible source of attraction or occurrence when the number of bugs has increased for the type falling under the category Insect-Preying. Further, when the number of bugs has increased for the type falling under the category Other of the internally-occurring type (specifically bedbugs), Notify detection of bedbugs is output as the physical control D41, and Apply chemical treatment for disinfestation and Apply preventive chemical treatment are output as the chemical control D42. The treatment method determining step S55 is executed by the treatment method determining part 713.

As described above, in the treatment method determining step S55, when the number of bugs has increased for the externally-invasive type, a method for preventing invasion of the increased bugs is output as the physical control D41, and applying chemical treatment to at least one of an invasion part and a source is output as the chemical control D42, for all categories except the category Other. When the number of bugs has increased for the internally-occurring type, cleaning and removing a source is output as the physical control D41, and Apply chemical treatment for disinfestation and Apply preventive chemical treatment to source are output as the chemical control D42, for all categories except the category Other.

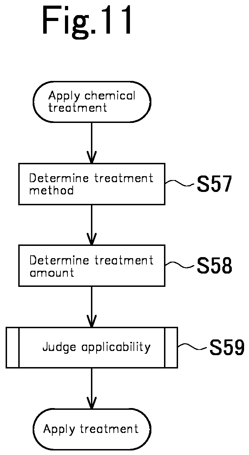

In the treatment method determining step S55, a type and amount of a chemical agent for use, a method for the chemical treatment, and a place to be subjected to the chemical treatment are determined for the chemical treatment as the chemical control D42. Specifically, as shown in Fig. 11, executed in the chemical treatment are: a treatment method determining step S57 of determining which type of chemical agent is used and what method is used for the treatment; a treatment amount determining step S58 of determining the amount of chemical agent used for the treatment; and an applicability judging step S59 of judging whether or not the chemical treatment is immediately applicable.

In the treatment method determining step S57, it is determined to spray a chemical agent selected for the source, at the source and a location in which bugs are detected. For example, the method for chemical treatment corresponding to the source information D3 is determined based on database (not shown).

In the treatment amount determining step S58, the amount used for treatment is determined for the chemical agent selected in the treatment method determining step S57. The amount of chemical agent used for treatment can be determined depending on the method for chemical treatment or the number of bugs occurring. For example, the amount of chemical agent for treatment depending on the treatment method D4 and the number of bugs can be derived and determined based on database (not shown).

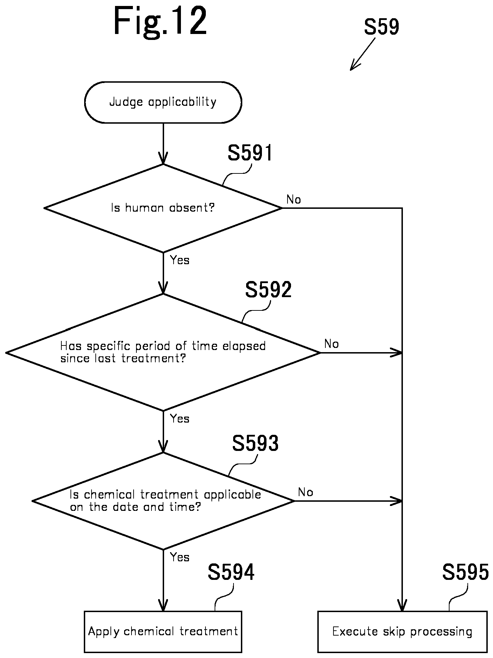

The applicability judging step S59 is a step of judging whether or not the chemical treatment is applied. Specifically, in the applicability judging step S59, whether or not the chemical treatment is applied is judged depending on the conditions of the location subjected to the chemical treatment. As shown in Fig. 12, the applicability judging step S59 of this embodiment includes: a human-presence judging step S591 of judging the presence of any human in the location subjected to the chemical treatment; a time judging step S592 of judging whether a specific period of time has elapsed since the last chemical treatment at the location subjected to the chemical treatment; and a treatment date and time judging step S593 of judging if spraying a chemical agent is permitted on the date and time. In the human-presence judging step S591, for example, information is acquired from a human presence sensor, a camera, or the like placed at the location subjected to the chemical treatment to judge whether any human is present in the location subjected to the chemical treatment. The treatment date and time judging step S593 is a step of judging whether the date and time is a predetermined permitted date and time for the chemical treatment, and the date and time at which the chemical treatment is permitted is, for example, set based on time or a day of the week. In this embodiment, when no human is judged to be present in the human-presence judging step S591 (i.e., YES in the human-presence judging step S591), a specific period of time is judged to have elapsed since the last chemical treatment in the time judging step S592 (i.e., YES in the time judging step S592), and the date and time is judged as a date and time at which the treatment is permitted in the treatment date and time judging step S593 (i.e., YES in the treatment date and time judging step S593), the chemical treatment is judged to be applicable and the treatment part 8 is instructed to apply the chemical treatment (i.e., chemical treatment application instruction step S594). When the presence of a human is judged in the human-presence judging step S591 (i.e., NO in the human-presence judging step S591), or no specific period of time is judged to have elapsed since the last chemical treatment in the time judging step S592 (i.e., NO in the time judging step S592), and the date and time is not judged as a date and time at which the treatment is permitted in the treatment date and time judging step S593 (i.e., NO in the treatment date and time judging step S593), the chemical treatment is judged not to be immediately applied and a skip processing S595 is executed. In the skip processing S595, the necessity of the chemical treatment is notified by a notifying device 81 of the treatment part 8 to an administrator or the like, and the administrator is prompted to manually apply the chemical treatment or to designate the date and time for the chemical treatment.

In the treatment outputting step S56, various instructions are sent to the treatment part 8 based on the contents output in the treatment method determining step S55. Specifically, when an output relating to the physical control D41 is made in the treatment method determining step S55, the output content is notified by the notifying device 81 to an administrator or the like of the building, and the administrator is prompted to perform the physical control D41. When an output relating to the chemical control D42 is made, the chemical treatment device 82 is controlled to apply the chemical treatment, or the skip processing S595 is executed. When the notifying device 81 makes a notification, the notifying device 81 can additionally notify that the notification relates to detective control.

As described above, according to the pest control system 7 of this embodiment, it is determined whether or not there is any type of bugs whose number has increased by the threshold or more, based on the identification result output by the bug identification system 6, and when there is a type of bugs whose number is determined to have increased by the threshold or more, the treatment method D4 is output corresponding to the type of the increased bugs; thus, adverse effects caused by the bugs can be suppressed.

Further, the configuration that the source information D3 is determined for the type of increased bugs to output the treatment method D4 corresponding to the source information D3 can suppress the overlapping treatment methods D4 from being output when, for example, a plurality of types of bugs occur from a single source.

A description has been given on the pest control system 7 for detective control by way of example, without limitation thereto.

For example, the description has been given by taking, for example, the case where the identification result output by the bug identification system 6 is used as the identification result, without limitation thereto. For example, the configuration can be such that an identification result output by a conventional bug identification system 6 or a manually determined identification result is used. Further, employed can be not only a bug identification system 6 in which the identification result for the bugs trapped by the bug trapping apparatus is used, but also a bug identification system 6 configured to detect bugs travelling in a building, identify the types of the bugs, and output the identification result per type (e.g., a bug identification system 6 configured to output, as identification results, types and the number of the bugs based on an odor sensor).

The description has been given by taking, for example, the case where the pest control system 7 determines and outputs the treatment method D4, without limitation thereto. For example, the configuration can be such that the pest control system 7 outputs the invasion passage information D2 or the source information D3 to notify the administrator or the like of the building. Such a configuration enables the administrator or the like of the building to engage in a work necessary for pest control based on the notified invasion passage information D2 or the notified source information D3.

The description has been given by taking, for example, the case where the source determining part 712 determines the source information D3 and the treatment method determining part 713 outputs the treatment method D4 corresponding to the source information D3, without limitation thereto. For example, the configuration can be such that the treatment method determining part 713 outputs the treatment method D4 not based on the source information D3 but according to the type output by the increase determining part 711 corresponding to the type of bugs whose number has increased.

The description has been given by taking, for example, the case where the treatment method determining part 713 outputs both the physical control D41 and the chemical control D42 as the control methods, but the configuration can be such that the treatment method determining part 713 outputs any one of the physical control D41 and the chemical control D42. When such a configuration is employed, the treatment method determining part 713 can be further configured to select and output an appropriate treatment method D4 from the physical control D41 and the chemical control D42 based on the information on, e.g., the number of bugs.

Further, the description has been given by taking, for example, the case where the treatment method D4 as the physical control D41 is notified by the notifying device 81 to the administrator or the like of the building, without limitation thereto. The configuration can also be such that the physical control D41 is automatically executed. For example, the configuration can be such that the treatment part 8 closes opening portions when Confirm opening portions is output.

The description has been given by taking, for example, the case where the determination is made using the previous identification result in the increase determining step S53, without limitation thereto. For example, the configuration can be such that it is determined for each type of bugs as to whether or not the number of bugs obtained as the latest result has increased by the threshold or more relative to the average number of bugs obtained from several past identification results.

Further, the description has been given by taking, for example, the case where the treatment method D4 is determined based on the source information D3, without limitation thereto. For example, the configuration can be such that the treatment method D4 is determined based on the type information D1 or based on the invasion passage information D2.

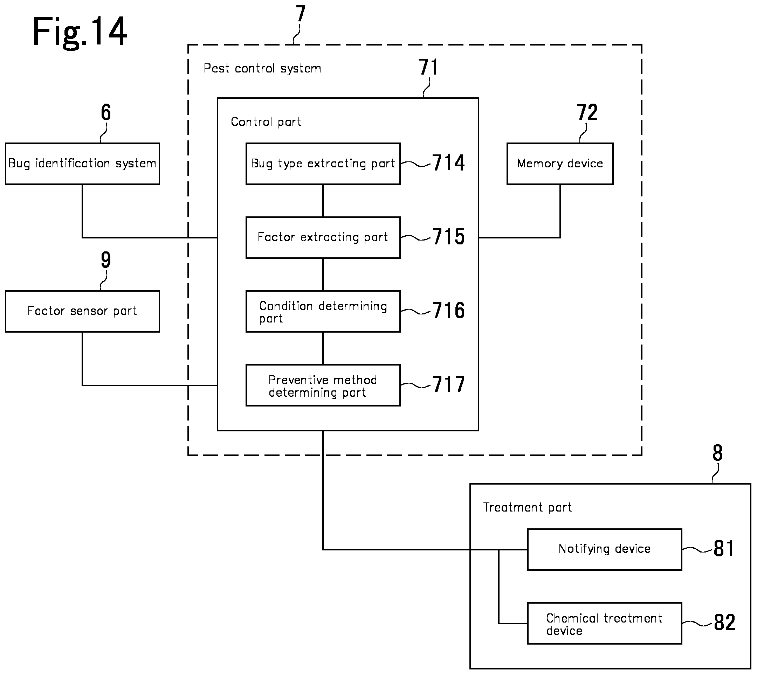

Next, a description will be given on the pest control system 7 for preventive control with reference to Fig. 14 to Fig. 16.

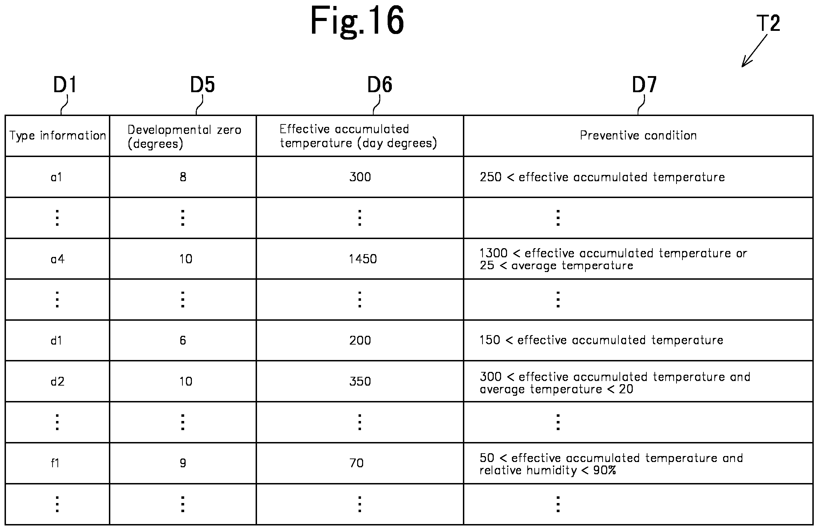

As shown in Fig. 14, the pest control system 7 for preventive control includes: a control part 71 configured to determine whether or not bugs are likely to increase based on the identification result received from the bug identification system 6 and environment information on the environment inside and outside the building received from a factor sensor part 9 for monitoring the environment inside and outside the building, and configured to output a preventive method for preventing the bugs from increasing when the bugs are likely to increase; and the memory device 72 configured to store database necessary for the control part 71 to make various determinations (e.g., tables T1 and T2 shown respectively in Fig. 13 and Fig. 16) and the environment information received from the factor sensor part 9. The configuration of the bug identification system 6 and the configuration of the treatment part 8 are respectively the same as those in the pest control system 7 for detective control.

The factor sensor part 9 is a sensor for monitoring the environment inside and outside the building, and is specifically a sensor for monitoring at least humidity and temperature. The factor sensor part 9 of this embodiment is placed to monitor the environment in a location inside the building in which the internally-occurring type of bugs may occur (specifically, the locations shown as the source information D3 for the internally-occurring type of bugs in Fig. 13) and the environment outside the building (specifically an area surrounding the building). The factor sensor part 9 outputs the environment information on the environment obtained by the monitoring to the pest control system 7.

The memory device 72 is configured to store the environment information received from the factor sensor part 9 within a specific period of time (e.g., a year's worth of the environment information). Further, the memory device 72 is configured to store database that the control part 71 uses for various determinations (e.g., tables T1 and T2 shown respectively in Fig. 13 and Fig. 16), and transmit the database to the control part 71 according to a request of the control part 71. Specifically, the memory device 72 stores a database in which a type of bugs is associated with a factor for increase (preventive condition D7) as shown in Fig. 16, and a database in which invasion passage information D2 and source information D3 are associated with the information on the treatment method D4 for each type of bugs (type information D1) as shown in Fig. 13. In the database shown in Fig. 16, developmental zero D5 and effective accumulated temperature D6 necessary for occurrence are associated with each other for each type of bugs.

The control part 71 includes: a bug type extracting part 714 configured to extract a type of bugs present in the number equal to or greater than a threshold from the identification result received from the bug identification system 6; a factor extracting part 715 configured to extract a factor (preventive condition D7) for which the number of bugs of the type extracted as being present by the bug type extracting part 714 increases; a condition determining part 716 configured to determine whether or not the factor (preventive condition D7) for the increase extracted by the factor extracting part 715 is met; and a preventive method determining part 717 configured to determine a method for preventing the increase and output the method to the treatment part 8 for the type determined by the condition determining part 716 to meet the factor (preventive condition D7) for the increase.

The bug type extracting part 714 is configured to extract the type for which the number of bugs is equal to or greater than the threshold, by referring to the number of bugs per type output as the identification result from the bug identification system 6. The bug type extracting part 714 of this embodiment is configured to extract the type of which one or more bugs are present, from the identification result.

The factor extracting part 715 is configured to extract the factor (preventive condition D7) for which the bugs of the type extracted by the bug type extracting part 714 increases. Specifically, the factor extracting part 715 extracts the factor (preventive condition D7) for which the bugs of the type extracted by the bug type extracting part 714 increases, by referring to the database stored in the memory device 72 (specifically the table T2 shown in Fig. 16). The factor extracting part 715 extracts, as the factor, a condition recorded as the preventive condition D7 in the table T2 shown in Fig. 16, specifically, extracts as the factor one or more conditions among the effective accumulated temperature D6 (i.e., value obtained by accumulating those temperatures exceeding the developmental zero D5 on a daily basis; in this embodiment day degrees), the average temperature (in this embodiment average temperature on a daily basis), and relative humidity. For example, the factor extracting part 715 extracts: the effective accumulated temperature being higher than 250 day degrees as the factor (preventive condition D7) for the increase for a type 1a; the effective accumulated temperature being higher than 1300 day degrees or the daily average temperature being higher than 25 degrees as the factor (preventive condition D7) for the increase for a type a4; the effective accumulated temperature being higher than 300 day degrees and the daily average temperature being lower than 20 degrees as the factor (preventive condition D7) for the increase for a type d2; and the effective accumulated temperature being higher than 50 day degrees and the relative humidity being less than 90% as the factor (preventive condition D7) for the increase for a type f1. Further, the factor extracting part 715 extracts, from the database, information (specifically the developmental zero D5) used for determining whether each of the factors above is met.

The condition determining part 716 is configured to determine whether the factor (preventive condition D7) for which the bugs increase is met, based on the environment information output by the factor sensor part 9 and the factor extracted by the factor extracting part 715. Specifically, the condition determining part 716 derives the average temperature, the relative humidity, the effective accumulated temperature, and the like based on the environment information output by the factor sensor part 9 and stored in the memory device 72 and the information (e.g., the developmental zero D5) used for determining whether each of the factors extracted by the factor extracting part 715 is met, and determines whether the factors extracted by the factor extracting part 715 are met based on the derived results. The condition determining part 716 determines, for the externally-invasive types of bugs, whether the factors are met based on the environment information outside the building, and determines, for the internally-occurring types of bugs, whether the factors are met based on the environment information inside the building (specifically the environment information on a location inside the building in which any internally-occurring types of bugs may occur).

The preventive method determining part 717 is configured to determine a method for preventing the increase for the type determined by the condition determining part 716 to meet the factor. The preventive method determining part 717 determines the preventive method for preventing the bugs from increasing for the type determined by the condition determining part 716 to meet the factor, by referring to the table T1 as shown in Fig. 13. The preventive method determining part 717 of this embodiment determines the invasion passage information D2 and the source information D3 for the type determined to meet the factor, specifically, acquires the invasion passage information D2 and the source information D3 corresponding to the type of bugs whose number is determined to have increased, by referring to the type information D1 in the table T1. The preventive method determining part 717 determines the preventive method for preventing the bugs from increasing based on the acquired source information D3, and output the method to the treatment part 8.

The preventive method determining part 717 of this embodiment outputs, as the preventive method, a treatment method D4 similar to the aforementioned treatment method D4 output by the treatment method determining part 713. Without limitation thereto, however, the configuration can be such that the preventive method determining part 717 outputs different methods between the treatment method D4 and the preventive method. For example, in the preventive method, the preventive method determining part 717 can output only the physical control D41 without the chemical control D42 being output, or can output adjusting temperature and humidity (environment); and in the chemical control D42, the preventive method determining part 717 can output applying chemical treatment using a slow-acting chemical agent less repellent than the chemical agent used in the treatment method D4.

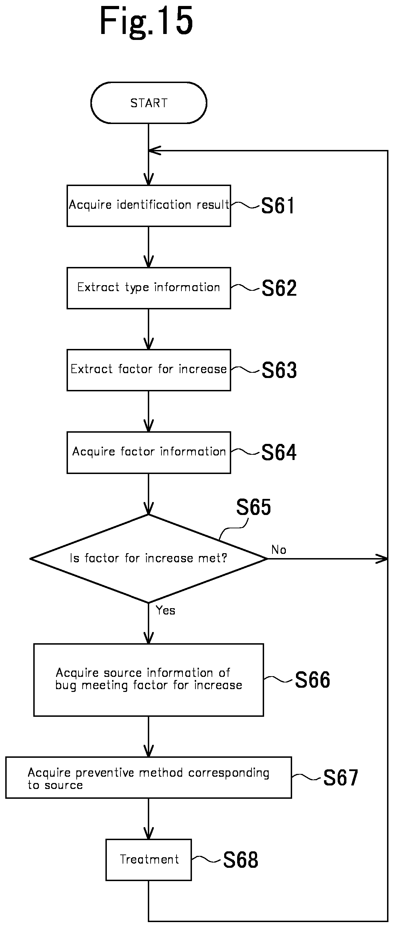

A description will be given on a flow of processing in the pest control system 7 as described above, with reference to Fig. 15.

As shown in Fig. 15, the pest control system 7 repeatedly executes an identification result acquiring step S61, a type information extracting step S62, an increase factor extracting step S63, a factor information acquiring step S64, a factor determining step S65, a source information acquiring step S66, a preventive method acquiring step S67, and a treatment outputting step S56.

The identification result acquiring step S61 is a step of acquiring the identification result output by the bug identification system 6. The identification result acquiring step S61 of this embodiment is executed at regular time intervals. The identification result acquiring step S61 of this embodiment is executed through the output of the identification result by the bug identification system 6 at regular time intervals. The identification result acquiring step S61 is executed by the bug type extracting part 714.

The type information extracting step S62 is a step of extracting the type for which the number of bugs is equal to or greater than the threshold, from the identification result acquired in the identification result acquiring step S61. In this embodiment, it is a step of extracting the type of which one or more bugs are present from the identification result. The type information extracting step S62 is executed by the bug type extracting part 714.

The increase factor extracting step S63 is a step of extracting the factor (preventive condition D7) for the increase for the type extracted in the type information extracting step S62 from the database. Specifically, in the increase factor extracting step S63, the factor (preventive condition D7) for which the bugs of the type extracted in the type information extracting step S62 increase, and information (specifically the developmental zero D5) used for determining whether the factor (preventive condition D7) for the increase is met are extracted by referring to the database stored in the memory device 72. The increase factor extracting step S63 is executed by the factor extracting part 715.

The factor information acquiring step S64 is a step of acquiring the environment information on the factor (preventive condition D7) for which the bugs increase extracted in the increase factor extracting step S63. Specifically, the factor information acquiring step S64 is a step of acquiring the environment information stored in the memory device 72, and deriving the factor information such as the average temperature, the relative humidity, the effective accumulated temperature, and the like based on the acquired environment information and the information used for determining whether the factor (preventive condition D7) for the increase extracted in the increase factor extracting step S63 is met. The factor information acquiring step S64 is executed by the factor extracting part 715.

The factor determining step S65 is a step of determining whether or not the factor information derived in the factor information acquiring step S64 meets the factor (preventive condition D7) for the increase of the bugs extracted in the increase factor extracting step S63. The step moves to the identification result acquiring step S61 when the factor information is determined in the factor determining step S65 not to meet the preventive condition D7 for all those types extracted in the type information extracting step S62 (i.e., NO in the factor determining step S65); and the step moves to the source information acquiring step S66 when the factor information is determined in the factor determining step S65 to meet the preventive condition D7 for at least one type extracted in the type information extracting step S62 (i.e., YES in the factor determining step S65). The factor determining step S65 is executed by the condition determining part 716.

The source information acquiring step S66 is a step of identifying the source information D3 and the invasion passage information D2 for the type in which the factor (preventive condition D7) for the increase of the bugs is met. Specifically, the source information acquiring step S66 is a step of identifying the source of the increased bugs for the type determined to meet the condition (preventive condition D7) for the increase of the bugs, by referring to the invasion passage information D2 and the source information D3 in the database (in this embodiment the table T1 shown in Fig. 13). The specific processing in the source information acquiring step S66 is similar to that in the source determining step S54 in the pest control system 7 for detective control. The source information acquiring step S66 is executed by the preventive method determining part 717.

The preventive method acquiring step S67 is a step of determining the treatment method D4 corresponding to the source of the bugs of the type determined to meet the factor for the increase. Specifically, it is a step of determining a treatment for suppressing the increasing bugs from increasing, based on the invasion passage information D2 and the source information D3 determined in the source information acquiring step S66. In the treatment method determining step S55 of this embodiment, the treatment method D4 corresponding to the source information D3 is output with reference to the database (e.g., the table T1 shown in Fig. 13). The preventive method acquiring step S67 in this embodiment is similar to the treatment method determining step S55 in the pest control system 7 for detective control. That is, the preventive method acquiring step S67 includes a specific method for chemical treatment in the chemical control D42 and a step of determining whether the chemical treatment is applicable.

In the treatment outputting step S68, various instructions are sent to the treatment part 8 based on the contents output in the preventive method acquiring step S67. The treatment outputting step S68 of this embodiment is similar to the treatment outputting step S56 in the pest control system 7 for detective control. Specifically, when an output relating to the physical control D41 is made in the preventive method acquiring step S67, the output content is notified by the notifying device 81 to an administrator or the like of the building, and the administrator or the like is prompted to apply the physical control D41. When an output relating to the chemical control D42 is made, the chemical treatment device 82 is controlled to apply the chemical treatment, or the skip processing S595 is executed.

The pest control system 7 configured as above can determine whether or not the factor for the increase of bugs is met for the type for which the number of bugs is equal to or greater than the threshold, and can apply a preventive treatment if the factor for the increase is met, thereby being capable of suppressing the bugs from increasing.

The configuration that the source information D3 is determined for the type that has met the factor for the increase to output the treatment method D4 corresponding to the source information D3 can suppress the overlapping treatment methods D4 from being output when, for example, a plurality of types of bugs occur from a single source.

The description has been given by taking, for example, the case where the environment information is acquired from the factor sensor part 9 in the above pest control system 7, without limitation thereto. For example, the environment information on the environment outside the building can be acquired not relying on the sensor but from, for example, weather information.

The factor for which the bugs increase has been described by taking, for example, the effective accumulated temperature D6, the average temperature, and the relative humidity, without limitation thereto. For example, information on seasons, the climate, or the hours of sunlight can also be employed.

Further, the pest control system 7 has been described by being separated into the pest control system 7 for detective control and the pest control system 7 for preventive control, without limitation thereto. The configuration can be such that a single system can execute both detective control and preventive control. In such a configuration, for example, both detective control and preventive control can be executed when the bug identification system 6 outputs the identification result to output both the treatment necessary for detective control and the treatment necessary for preventive control to the treatment part 8.

The present disclosure includes the following:
(1) A method for generating bug identification image data, the method including: a bug extracting step of extracting bug data on a bug from pre-processing image data with an image of the bug; a point information imparting step of imparting point information data to at least three points designated from among the extracted bug data; and a sequence information imparting step of imparting sequence information on an order to the point information data at the at least three points designated in the point information imparting step.
(2) The method for generating the bug identification image data according to (1), in which the bug extracting step includes a frame information imparting step of imparting frame information on a frame for surrounding the bug in the image, in which the bug data is extracted based on the frame information imparted in the frame information imparting step.
(3) The method for generating the bug identification image data according to (1) or (2), in which, in the point information imparting step, the point information data are imparted to allow the at least three points to correspond to two or more parts out of a plurality of parts of the bug, and in the sequence information imparting step, the sequence information are imparted to the point information data based on the order of arrangement of the two or more parts.
(4) The method for generating the bug identification image data according to any one of (1) to (3), in which, in the point information imparting step, the point information data are imparted to the at least three points designated from among the bug data, the at least three points including: a head-corresponding point that corresponds to a head of the bug of the bug data; an abdomen-corresponding point that corresponds to an abdomen of the bug; and an intermediate point located between the head-corresponding point and the abdomen-corresponding point.
(5) The method for generating the bug identification image data according to any one of (1) to (4), in which, in the point information imparting step, the point information data is imparted to, as the intermediate point, a feature point located between the head-corresponding point and the abdomen-corresponding point.
(6) The method for generating the bug identification image data according to any one of (1) to (5), in which the pre-processing image data is generated by an image capturing apparatus including: a camera disposed away from a trapping surface of a trapped specimen to capture an image of the trapping surface on which the bug is trapped, the camera being configured to travel along a plane direction of the trapping surface; and an illumination apparatus configured to illuminate the trapping surface with light from both sides of an area in which the camera travels, and the image capturing apparatus is configured to capture a plurality of the images while allowing the camera to travel, and connect the plurality of captured images to each other to generate the pre-processing image data.
(7) The method for generating the bug identification image data according to any one of (1) to (6), the method configured to generate the bug identification image data as training data for use in machine learning, the method including a type information imparting step of imparting type information on a type of the bug to the extracted bug data.
(8) A bug identification system including: an image data acquiring part configured to acquire an object image data with an image of a bug to be identified; and a bug identifying part configured to identify a type of the bug in the object image data, in which the bug identifying part is configured to identify the type of the bug in the object image data acquired by the image data acquiring part through a learned model constructed by machine learning using training data, and the learned model is constructed through the machine learning using the training data including: training image data with an image of a bug; posture information including point information data imparted to at least three points designated from among the bug data on the bug in the training image data, and sequence information on an order imparted to the point information data; and type information on the type of the bug in the training image data.

According to the method for generating the bug identification image data of (1) in which the point information data 4 and the sequence information 5 are imparted to the extracted bug 1, the posture of the bug 1 can be determined based on the point information data 4 and the sequence information 5, and the type of the bug 1 can be properly identified even when, for example, the bug 1 is bent. This can increase the identification accuracy of the bug 1 in the image data.

According to the method for generating the bug identification image data of (2) in which the frame information is imparted to the extracted bug 1, the bug 1 can be easily identified even when a plurality of the bugs 1 overlap each other.

According to the method for generating the bug identification image data of (3) in which the point information data 4 are designated on the two or more parts and the point information data 4 are imparted based on the order of arrangement of the parts, the posture of the bug 1 can be properly determined even when the bug 1 is bent.

According to the method for generating the bug identification image data of (4) in which the posture of the bug 1 can be determined based on the at least three points including the head-corresponding point 41, the abdomen-corresponding point 42, and the intermediate point 43, the posture of the bug 1 can be properly determined even when the bug 1 is bent.

According to the method for generating the bug identification image data of (5) in which the point information data 4 is imparted to the feature point as the intermediate point 43, the point information data 4 can be imparted to substantially the same positions of the bugs 1 if these bugs 1 are of the same type.

According to the method for generating the bug identification image data of (6), the image capturing apparatus 3 configured to illuminate from both sides of the travelling area can suppress the bug 1 from casting a shadow. Further, the image capturing apparatus 3 configured to connect the plurality of images to each other to generate the pre-processing image data can suppress the bug 1 from blurring in the pre-processing image data.

According to the method for generating the bug identification image data of (7) including the type information imparting step of imparting the type information on the type of the bug 1, the image data of the bug 1 can be used as the training data even when the bug 1 in the image data is bent.

According to the bug identification system 6 of (8) in which the learned model 65 is constructed by machine learning using the training data including the posture information that includes the point information data 4 and the sequence information 5 on the at least three points designated from among the bug data D in the training image data, the type of the bug 1 can be properly identified even when, for example, the bug 1 is bent.

### REFERENCE SIGNS LIST

1: Bug
11: Body
12: Appendage
13: Head
14: Trunk
15: Thorax
16: Abdomen
2: Trapped specimen
2a: Trapping surface
3: Image capturing apparatus
31: Housing
32: Image capturing device
33: Illumination apparatus
34: Camera
35: Illumination part
4: Point information data
41: Head-corresponding point
42: Abdomen-corresponding point
43: Intermediate point
5: Sequence information
6: Bug identification system
61: Communication part
62: Image data acquiring part
63: Bug identifying part
64: Output part
65: Learned model
7: pest control system
71: Control part
711: Increase determining part
712: Source determining part
713: Treatment method determining part
714: Bug type extracting part
715: Factor extracting part
716: Condition determining part
717: Preventive method determining part
72: Memory device
8: Treatment part
81: Notifying device
82: Chemical treatment device
C: Client terminal
D: Bug data
F: Frame
I: Internet
P: Computer

## Claims

1. A method for generating bug identification image data, the method comprising:
a bug extracting step of extracting bug data on a bug from pre-processing image data with an image of the bug;
a point information imparting step of imparting point information data to at least three points designated from among the extracted bug data; and
a sequence information imparting step of imparting sequence information on an order to the point information data at the at least three points designated in the point information imparting step.

2. The method for generating the bug identification image data according to claim 1, wherein the bug extracting step comprises a frame information imparting step of imparting frame information on a frame for surrounding the bug in the image, in which the bug data is extracted based on the frame information imparted in the frame information imparting step.

3. The method for generating the bug identification image data according to claim 1, wherein, in the point information imparting step, the point information data are imparted to the at least three points that correspond to two or more parts out of a plurality of parts of the bug, and
in the sequence information imparting step, the sequence information are imparted to the point information data based on the order of arrangement of the two or more parts.

4. The method for generating the bug identification image data according to claim 1, wherein, in the point information imparting step, the point information data are imparted to the at least three points designated from among the bug data, the at least three points comprising: a head-corresponding point that corresponds to a head of the bug of the bug data; an abdomen-corresponding point that corresponds to an abdomen of the bug; and an intermediate point located between the head-corresponding point and the abdomen-corresponding point.

5. The method for generating the bug identification image data according to claim 4, wherein, in the point information imparting step, the point information data is imparted to, as the intermediate point, a feature point located between the head-corresponding point and the abdomen-corresponding point.

6. The method for generating the bug identification image data according to claim 1, wherein the pre-processing image data is generated by an image capturing apparatus comprising: a camera disposed away from a trapping surface of a trapped specimen to capture an image of the trapping surface on which the bug is trapped, the camera being configured to travel along a plane direction of the trapping surface; and an illumination apparatus configured to illuminate the trapping surface with light from both sides of an area in which the camera travels, and
the image capturing apparatus is configured to capture a plurality of the images while allowing the camera to travel, and connect the plurality of captured images to each other to generate the pre-processing image data.

7. The method for generating the bug identification image data according to claim 1, the method configured to generate the bug identification image data as training data for use in machine learning, the method comprising a type information imparting step of imparting type information on a type of the bug to the extracted bug data.

8. A bug identification system comprising:
an image data acquiring part configured to acquire an object image data with an image of a bug to be identified; and a bug identifying part configured to identify a type of the bug in the object image data, wherein
the bug identifying part is configured to identify the type of the bug in the object image data acquired by the image data acquiring part through a learned model constructed by machine learning using training data, and
the learned model is constructed through the machine learning using the training data comprising:
training image data with an image of a bug;
posture information comprising point information data imparted to at least three points designated from among the bug data on the bug in the training image data, and sequence information on an order imparted to the point information data; and
type information on the type of the bug in the training image data.
